# EUROPEAN PATENT APPLICATION

(11) **EP 1 859 681 A1**
(43) Date of publication of application: **28.11.2007**
(21) Application number: 06114536.3
(22) Date of filing: 24.05.2006
(51) Int. Cl.: A23B 4/20, A23B 4/24, A23B 4/02, A23B 4/12, A23K 3/00, A23K 1/10, A23K 1/18, C11B 1/00, C11B 13/00, A01N 1/00, A23K 1/16

(54) **Method for preserving animal tissue by use of a chemical composition**

(71) Applicant: Addcon Agrar GmbH, 53113 Bonn (DE)
(72) Inventor: Weißbach, Prof. Dr. Friedrich, 18107, Elmenhorst (DE); Kochannek, Bernd, 53113, Bonn (DE)
(74) Representative: Jönsson, Hans-Peter

(57) **Abstract**

The present invention relates to a method for preserving animal tissue for the use as feed for fur animals or for further processing. This method includes the acidification of the animal tissue and the use of a composition containing alkali and/or alkaline earth metal salts of sulphurous acid, a formaldehyde releasing compound and alkali and/or alkaline earth metal salts of benzoic acid dissolved in water.

## Description

The present invention relates to a method for preserving animal tissue for the use as feed for fur animals or for further processing. This method includes the acidification of the animal tissue and the use of a composition containing alkali and/or alkaline earth metal salts of sulphurous acid, a formaldehyde releasing compound and alkali and/or alkaline earth metal salts of benzoic acid dissolved in water.

By-products from the fish industry and from slaughter houses can be used as a source of feeds prepared for feeding animals, preferably fur animals like minks and foxes. Such by-products can also be used to extract oil ore fat by separation and protein or protein fractions by fractionating and/or drying. In each case, these by-products have to be preserved to prevent spoiling or deterioration and to inhibit proliferation of harmful microorganism during the storage before said animal tissue is used as a feed or before it is further processed.

It is known that by-products from processing fish (heads, bones, fins, viscera) or even the whole fish can be preserved for feeding purposes after mincing by adding chemical preservatives to the paste-like or semi-liquid material. By-products from poultry slaughter houses (heads, feet, viscera) and also offal from the slaughter of pigs and cattle (mainly viscera) can be preserved by a similar procedure for the use in feeding fur animals. Aim of the preservation procedure is the total inhibition of any microbial activity in this highly perishable material in order to prevent spoiling of the material and survival or proliferation of pathogen microorganisms.

For short time storage, the minced by-products can be preserved by strong acidification with high amounts of sulphuric acid. But preservation of the material and elimination of pathogenic bacteria are not sufficiently ensured by this way and, in addition, only a small amount of the obtained material can be fed because of its high content of sulphuric acid.

More common and widespread is the use of formic acid in high dosage rates (1.5 - 3.5 % by weight) solely or in combination with sodium benzoate (0.3 % by weight), wherein formic acid is used mainly to suppress bacteria and benzoate to suppress yeast and mould growth at the top surface of the stored material.

A substantial disadvantage of this preservation method is that fur animals, in particular minks but also foxes, have a very low metabolic tolerance towards formic acid so that only small proportions of the by-product can be integrated in their diets (Pölönen: "Silage for fur animals". Academic dissertation, Helsinki, 2000).

To prevent this disadvantage, smaller dosage rates of formic acid have been tried to use in practice. However, this led to a high risk of spoiling the material during storage, in particular during summer time, and of proliferation of pathogenic bacteria like Clostridium botulinum. Outbreaks of botulism in several fur farms and the need to kill all animals in these farms have to be experienced in some cases. Wide spreading of other pathogenic bacteria like Salmonella with insufficiently treated slaughter house by-products in the feeding is a potential risk as well. For this reasons, the major requirement of feeds from animal origin for the feeding of fur animal must be met by the expensive procedure of deep-freezing the by-products up to now.

Another problem connected with the use of formic acid as a preservative for by-products of animal origin is the so called "boiling phenomenon" which occasionally occurs and means a suddenly and extensively expanding of the material by intensive forming of gas bubbles and foam (Ahlstrǿm et al.: Scientifur, 2004, Vol. 28, No 3 pp 142-146). The formed and released gas proved to be highly combustible and explosive. In case of preserved poultry by-products it has been proven that the gas was generated by Clostridia and mainly consists of molecular hydrogen. These results clearly show that formic acid does not reliably inhibit the bacterial growth, in particular of Clostridia. The occurrence the "boiling phenomenon" is regarded as impossible to anticipate and to control reliably up to now. In order to stop the "boiling phenomenon" in case of its occurrence, a subsequent supplementary addition of sodium disulfite solution has been recommended.

Sodium disulfite is commonly used to preserve fish and poultry by-products instead of formic acid in some countries. Its use was also recommended in the past as a silage additive for ensiling green forage crops. However, crystalline sodium disulfite is difficult to distribute homogeneously within the materials to be preserved. Concentrated sodium disulfite solution is more easily distributed, but it has a high sulfur dioxide steam pressure and is therefore difficult to handle. In addition, it is not frost-resistant. At temperatures of a few degrees below 0 °C, salts precipitate which have a complex composition and are difficult to resolve even by warming up the solution to room temperature. It has been already proposed to mix sodium disulfite solution with formalin in order to overcome these disadvantages and to produce a silage additive for ensiling green forage crops in this way (see also DD 264610).

It is known that several preserving substances or mixtures of them can be used as agents to control microbial activity when making silages from green forage crops or other moist materials of plant origin. These substances are traditionally named "silage additives". US 4,073,889 teaches a dry salt mixture consisting of sodium benzoate, sodium disulfite and calcium formate, which has been proposed as a silage additive for preventing aerobic decomposition processes in "fermented fodder prepared from green fodder". The mixture of example 3 additionally containing sodium nitrite must be dry, since the reducing agent sodium disulfite would react with the oxidizing agent sodium nitrite in aqueous solution to yield nitric oxide as a gas and sodium sulfate in an irreversible reaction. DE 3118918 A1 discloses a silage additive comprising sodium benzoate, sodium disulfite and hexamethylenetetramine for improving silage fermentation and preventing aerobic decomposition of the silage after storage. The proposal includes the use of this mixture as dry substance or as an aqueous solution of low concentration prepared before application to treat heavily wilted green forage crops during ensiling.

All the named chemical compounds develop their microbiocidal effect only in acidic conditions by releasing for example benzoic acid from benzoate, hydrogensulfite or sulfurous acid from sulfite and formaldehyde from hexamethylenetetramine as the actually preserving agents. In addition, it is known that the preserving effect of these agents increases with decreasing pH value. The main preserving effect of benzoic acid and of sulfurous acid is caused by the respective undissociated compounds, and the dissociation equilibrium is shifted in the direction of the undissociated compound with further decrease of the pH. In a similar way, the decomposition equilibrium of hexamethylenetetramine to formaldehyde and ammonia is shifted by dropping the pH.

In silage making from green forage crops or other moist plant materials, acidic conditions are regularly created by lactic acid fermentation, i.e. by a controlled microbial activity resulting in an enrichment of lactic acid. The thereby caused low pH value of the silage is a necessary component of this preserving procedure.

In contrast to silage making from green forage crops, the preservation procedure of material from animal origin has to be strictly aimed at the total inhibition of all microbial activities in order to prevent spoilage and survival or proliferation of pathogen bacteria. Therefore, acidic conditions have to be created by adding an acid in each case.

US 3,600,198 discloses a process of fish preservation wherein fish is contacted with a composition which contains a mixture of propionic acid and benzoic acid buffered by the alkali metal salts of these acids to a pH between 4 and 5 and which is used as diluted solutions. Such a process is only suitable for a short time preservation of fish.

The object of the present invention is to find a method for preserving animal tissue, in particular by-products from the fish industry and from slaughter houses which has an improved preservation effect and which enables an increased use of the preserved by-products in the feeding of fur animals.

The aforementioned object is achieved in a first embodiment by a process for preservation of animal tissue, characterized by treating the animal tissue with a composition containing
a) 2 to 35 % by weight of at least one alkali and/or alkaline earth metal salt of sulfurous acid, calculated as sodium salt,
b) 2 to 35 % by weight of at least one formaldehyde releasing compound, and
b) 2 to 35% by weight of at least one alkali and/or alkaline earth metal salt of benzoic acid, calculated as sodium salt,

in a aqueous solution wherein all the weight percentages are given with respect to the total weight of all named components a) to c) plus the water and by mixing said composition with the animal tissue after the animal tissue has been minced and acidified by adding an acid.

It has been found that the combined use of sulphite, a formaldehyde releasing compound such as hexamethylenetetramine and benzoate in one composition, which is added to the pre-acidified animal tissue, exhibits a surprising positive effect against spoiling and harmful microorganisms in preserving material from animal origin.

Owing to the synergistic activity of the three preserving compounds and their reaction products, formic acid, which is usually used for acidifying the by-product, can be replaced by a mineral acid. In this way, a substantial increase of the proportion of preserved by-products in the diets of fur animal proved to be possible.

Animal tissue in the sense of the present invention may preferably be fish or by-products from the fish, poultry or meat industry, or other marine animals than fish or of by-products from processing these other marine animals.

The formaldehyde releasing compound may preferably be hexamethylenetetramine.

The total solid content in the aqueous solution is preferably within a range from 20 to 50 % by weight, more preferred in a range from 30 to 40 % by weight.

The composition employed is preferably a clear and frost-stable solution of the ingredients and reacting products.

Preferably, the animal tissue is treated with a composition containing
a) 10 to 25% by weight of at least one alkali and/or alkaline earth metal salt of sulfurous acid, calculated as sodium salts,
b) 5 to 15% by weight of hexamethylenetetramine, and
c) 5 to 15% by weight of at least one alkali and/or alkaline earth metal salt of benzoic acid, calculated as sodium salts.

In an even more preferred embodiment, the animal tissue is treated with a composition containing
a) 14 to 18% by weight of at least one alkali and/or alkaline earth metal salt of sulfurous acid, calculated as sodium salts,
b) 6 to 10% by weight of hexamethylenetetramine, and
c) 8 to 12% by weight of at least one alkali and/or alkaline earth metal salt of benzoic acid, calculated as sodium salts.

When using this particularly preferred composition, surprisingly good preservation results were obtained with 15 to 25 litres per ton fresh material. The necessary dosage rate of the composition depends, however, on the hygienic status of the respective product, the degree of its acidification, the storage temperature and the intended storage duration.

Preferably, the pH valued prior to the treatment with the composition is adjusted to less than 5 during the acidification.

Advantageously, the minced animal tissue is acidified by sulphuric acid, hydrochloric acid, formic acid and lactic acid or a mixture thereof.

In particular, 2 to 40 litres of the composition per ton of animal tissue to be preserved are applied.

The process according to the present invention preferably comprises the following steps:
I. preparing an aqueous solution of a),
II. dissolving b) in the solution prepared according to I. in such a quantity that a pH of at least 8 is obtained, and
III. adding c) and dissolving it in the mixture prepared according to II.

Alternatively, the composition may also be prepared in an analogous manner by mixing together approximately concentrated solutions of the three individual components. The composition is then prepared in two steps.

The solution of formaldehyde releasing compound, in particular hexamethylenetetramine preferably is to be given to and mixed with the sodium disulfite solution. After checking the pH value, the sodium benzoate solution is preferably added while mixing. It is essential not to alter the sequence of the addition. The pH of the mixture preferably may be ≥ 8.0 before the sodium benzoate is added.

It is known that the solubility of benzoic acid in water is very small. Therefore, sodium benzoate cannot usually be solved in an acidic reaction medium without precipitation of benzoic acid. Solutions of hydrogensulfite or disulfite have a pH value near 4. It is also known, that acidic reaction solutions can be neutralized by adding hexamethylenetetramine which is thereby hydrolyzed and split into formaldehyde and ammonia. When hexamethylenetetramine is added to a solution of hydrogensulfite or disulfite, the released formaldehyde spontaneously further reacts with hydrogensulfite and the new compound hydroxymethylenesulfonate is formed. If the reaction would be complete, one mol hexamethylenetetramine would be able to neutralize up to 10 mol of hydrogensulfite. It was found that with a preferred molar relation of hexamethylenetetramine to hydrogensulfite as 1 to 5, a pH value of more than 8.0 is reliably achieved in a few minutes so that then sodium benzoate can be dissolved and a clear and stable solution of all the three components can be obtained.

It is assumed that a new compound hydroxymethylenesulfonate is formed and provides the mixture advantageous handling properties. The composition does release neither sulphur dioxide gas nor formaldehyde and its frost-stability is substantially improved.

When the composition is added to a pre-acidified animal tissue, the proposed hydroxymethylenesulfonate is slowly decomposed again according to the equation

HO-CH₂-SO₃Na → HCHO + HSO₃⁻ + Na⁺

into both bactericidal substances formaldehyde and hydrogensulfite. This substantially contributes to the surprisingly high preservation effect of the composition produced and applied according to the invention.

As known, hydrogensulfite has strong reducing properties and can bind free oxygen by forming sulphate. By this way, undesirable reactions of unsaturated fatty acids with oxygen, otherwise occurring and forming fatty acid peroxides, can be prevented when the composition according to the invention is used.

Additionally, it was found that by an emulsifying effect of hydroxymethylenesulfonate oil and fat in the so preserved animal tissue do not as much separate from the aqueous phase during the storage unlike it would otherwise occur. The more homogeneous material is advantageous for the feeding of fur animals which need fat and protein in the right proportions in their diets.

In a further embodiment, the problem underlying the present invention is solved by a composition for preserving animal tissue, comprising an aqueous solution of
a) 2 to 35 % by weight of at least one alkali and/or alkaline earth metal salt of sulfurous acid, calculated as sodium salt,
b) 2 to 35 % by weight of at least one formaldehyde releasing compound and
b) 2 to 35% by weight of at least one alkali and/or alkaline earth metal salt of benzoic acid, calculated as sodium salt.

In a preferred embodiment, the composition comprises hexamethylenetetramine as formaldehyde releasing compound.

Preferably, the composition additionally contains 1 to 5% by weight propanediol.

Advantageously, the composition additionally contains 0.1 to 0.6% by weight of Ethoxyquin (dihydro-6-ethoxy-2,2,4-trimethyl-quinoline).

In a further embodiment, the problem underlying the present invention is solved by the use of the product of the process according to the present invention as a feed or a component of a feed mixture for fur animals, cats or dogs.

In a further embodiment, the problem underlying the present invention is solved by the use of the product of the process according to the present invention for further processing in order to extract oil, fat or special fat fractions, a protein concentrate or special protein fractions therefrom.

The invention is described in more detail below by means of examples.

### Example 1

In a stirring reactor equipped for simultaneous cooling, 780 litres of water was used to dissolve 195 kg of sodium disulfite. Then 100 kg of hexamethylenetetramine were slowly added while stirring and cooling. After a reaction time of about 30 minutes and checking the pH value, finally 125 kg of sodium benzoate were added and completely dissolved. The resulting clear solution had a volume of about 1000 litres, a density of 1.20 kg/litre and a pH between 8 and 9.

### Example 2

11730 kg of roughly minced poultry offal was mixed in a paddle mixer with 130 litres of concentrated sulfuric acid. Then 240 kg of the composition described in Example 1 were added and the material carefully mixed. The preserved material was stored during the summer from May to October in an open storage container. Its pH value was 3.6 at the beginning of the storage. After different time of storage the following quality parameters were obtained:

| | | Duration of storage | | Target figures |
|---|---|---|---|---|
| | | 1 month | 3 months | |
| Aerobic bacteria | cfu/g | < 10 000 | < 10 000 | < 5 000 000 |
| Enterococci | cfu/g | < 1 000 | < 1 000 | < 50 000 |
| Coli-form bacteria | cfu/g | < 1 000 | < 1 000 | < 50 000 |
| Haemolytic bacteria | cfu/g | < 1 000 | < 1 000 | < 50 000 |
| Sulfite reducing Clostridia | cfu/g | < 1 000 | < 1 000 | < 10 000 |
| Salmonella | cfu/10g | negative | negative | negative |
| Moulds | cfu/g | < 1 000 | 200 | |
| pH value | | 4.6 | 4.6 | ≤ 4.8 |
| TVN* | mg/100g | 32 | 43 | ≤ 75 |
| Peroxides per kg | meq O₂ | - | 17 | ≤ 20 |

| | | | | |
|---|---|---|---|---|
| *corrected by the ammonia released from the additive | | | | |

The preserved material was of good hygienic quality as the figures show. No "boiling phenomenon" or separating of a fat layer was observed.

### Example 3

9860 kg of roughly minced Baltic herring was mixed in a paddle mixer with 130 litres of concentrated sulfuric acid. Then 200 kg of the composition described in Example 1 were added and the material carefully mixed. The preserved material was stored during the summer from May to October in an open storage container. Its pH was 2.9 at the beginning of the storage. After different time of storage the following quality parameters were obtained:

| | | Duration of storage | | Target figures |
|---|---|---|---|---|
| | | 1 month | 3 months | |
| Aerobic bacteria | cfu/g | < 10 000 | < 10 000 | < 5 000 000 |
| Enterococci | cfu/g | < 1 000 | < 1 000 | < 50 000 |
| Coli-form bacteria | cfu/g | < 1 000 | < 1 000 | < 50 000 |
| Haemolytic bacteria | cfu/g | < 1 000 | < 1 000 | < 50 000 |
| Sulfite reducing Clostridia | cfu/g | < 1 000 | < 1 000 | < 10 000 |
| Salmonella | cfu/10g | negative | negative | negative |
| Moulds | cfu/g | < 1 000 | < 100 | |
| pH value | | 3.9 | 4.1 | ≤ 4.8 |
| TVN* | mg/100g | 46 | 55 | ≤ 75 |
| Peroxides per kg | meq O₂ | 16 | - | ≤ 20 |

| | | | | |
|---|---|---|---|---|
| *corrected by the ammonia released from the additive | | | | |

The preserved material was of good hygienic quality as the figures show. No "boiling phenomenon" or separating of a fat layer was observed.

### Example 4

After a storage time of 5 months, the chemical preserved poultry offal from Example 2 and the preserved fish material from Example 3 were integrated in high proportions into a fur animal diet. The diet contained 50 % of the preserved poultry by-product and in addition 12 % of the preserved herring.

This diet was tested in a 3 months lasting feeding trial with 100 pairs of blue foxes per experimental group. Feed acceptance, feed intake and weight gain of the animals and fur quality were examined in comparison with a common diet.

The diet was well accepted by the animals and they grew quite normally. No negative effect of the very high proportion of by-products preserved according to the invention was observed. The total proportion of by-products preserved in this way was 62 %. This is about 5 times more than is possible to use when the preservation is done with formic acid.

## Claims

1. A process for preservation of animal tissue, **characterized by** treating the animal tissue with a composition containing
a) 2 to 35 % by weight of at least one alkali and/or alkaline earth metal salt of sulfurous acid, calculated as sodium salt,
b) 2 to 35 % by weight of at least one formaldehyde releasing compound, and
b) 2 to 35% by weight of at least one alkali and/or alkaline earth metal salt of benzoic acid, calculated as sodium salt,
in an aqueous solution wherein all the weight percentages are given with respect to the total weight of all named components a) to c) plus the water by
mixing said composition with the animal tissue after the animal tissue has been minced and acidified by adding an acid.

2. A process according to claim 1, wherein hexamethylenetetramine is used as formaldehyde releasing compound.

3. A process according to claim 1, wherein the animal tissue is treated with a composition containing
a) 10 to 25% by weight of at least one alkali and/or alkaline earth metal salt of sulfurous acid, calculated as sodium salts,
b) 5 to 15% by weight of hexamethylenetetramine, and
c) 5 to 15% by weight of at least one alkali and/or alkaline earth metal salt of benzoic acid, calculated as sodium salts.

4. A process according to claim 1, wherein the animal tissue is treated with a composition containing
a) 14 to 18% by weight of at least one alkali and/or alkaline earth metal salt of sulfurous acid, calculated as sodium salts,
b) 6 to 10% by weight of hexamethylenetetramine, and
c) 8 to 12% by weight of at least one alkali and/or alkaline earth metal salt of benzoic acid, calculated as sodium salts.

5. A process according to claim 1, wherein pH value prior to the treatment with said composition is adjusted to less than 5 during the acidification.

6. A process according to any of claims 1 to 5, wherein the minced animal tissue is acidified with sulphuric acid, hydrochloric acid, formic acid and lactic acid or a mixture thereof.

7. A process according to any of claims 1 to 6, wherein 2 to 40 litres of the composition per ton of animal tissue to be preserved are applied.

8. A process according to any of claims 1 to 7, **characterized in that** it comprises the following steps:
I. preparing an aqueous solution of a),
II. dissolving b) in the solution prepared according to I. in such a quantity that a pH of at least 8 is obtained, and
III. adding c) and dissolving it in the mixture prepared according to II.

9. A composition for preserving animal tissue, comprising an aqueous solution of
a) 2 to 35 % by weight of at least one alkali and/or alkaline earth metal salt of sulfurous acid, calculated as sodium salt,
b) 2 to 35 % by weight of at least one formaldehyde releasing compound and
b) 2 to 35% by weight of at least one alkali and/or alkaline earth metal salt of benzoic acid, calculated as sodium salt.

10. A composition according to claim 9 comprising hexamethylenetetramine as formaldehyde releasing compound.

11. A composition according to claim 9, **characterized in that** it additionally contains 1 to 5% by weight propanediol.

12. A composition according to any of claims 9 to 11, **characterized in that** it additionally contains 0.1 to 0.6% by weight of dihydro-6-ethoxy-2,2,4-trimethyl-quinoline.

13. Use of the product of the process according to any of claims 1 to 8 as a feed or a component of a feed mixture for fur animals, cats or dogs.

14. Use of the product of the process according to any of claims 1 to 8 for further processing in order to extract oil, fat or special fat fractions, a protein concentrate or special protein fractions therefrom.
